# DEMANDE DE BREVET EUROPEEN

(11) **EP 3 564 643 A1**
(43) Date de publication de la demande: **06.11.2019**
(21) Numéro de dépôt: 18170626.8
(22) Date de dépôt: 03.05.2018
(51) Int. Cl.: G01M 1/04

(54) **MÉTHODE DE RÉNOVATION DE JANTES ET MACHINE DE RÉNOVATION DE JANTES**

(71) Demandeur: AST SERVICES Sàrl, 1208 Genève (CH)
(72) Inventeur: MAILLET, Philippe, 1211 Genève (CH)
(74) Mandataire: Omnis-IP

(57) **Abrégé**

La présente invention concerne une méthode de rénovation de jantes de véhicules. Cette méthode est caractérisée en ce qu'elle comporte les étapes suivantes :
• fixation de la jante (14) à rénover sur un support rotatif (12) d'une machine de rénovation (10) comportant un bâti (11), cette fixation étant identique à la fixation de ladite jante sur le véhicule auquel cette jante est destinée ;
• mise en place d'une masse d'inertie (22) sur ladite jante à rénover ;
• mise en rotation de la jante à rénover ;
• usinage de la jante au moyen d'un outil d'usinage (20).

L'invention concerne également une machine pour la rénovation de jantes, comportant un bâti (11), un support rotatif (12) et un ensemble d'usinage (13), caractérisée en ce que le support rotatif (12) comporte un organe de centrage (16) solidaire du support rotatif (12), cet organe de centrage (16) étant agencé pour traverser un moyeu de la jante, le support rotatif (12) comportant en outre une entretoise (17) disposée de telle façon qu'un espace soit présent entre la jante (14) et le support rotatif (12) lorsque cette jante est positionnée de façon à être rénovée.

## Description

### DOMAINE TECHNIQUE

La présente invention concerne une méthode de rénovation de jantes de véhicules, notamment de voitures. Elle concerne également une machine de rénovation de jantes de véhicules, comportant un bâti, un support rotatif et un ensemble d'usinage, cette machine permettant la mise en oeuvre de cette méthode.

### TECHNIQUE ANTERIEURE

Actuellement, lorsqu'une jante de véhicule est abimée, rayée ou déformée, elle peut être réparée au moyen d'une machine telle qu'un tour ou une fraiseuse. Ce travail de rénovation de jante est relativement délicat et demande une main d'oeuvre ayant un savoir-faire important. Une telle main d'oeuvre peut ne pas être disponible ou facile à trouver.

Avec les machines existantes, la jante est tout d'abord séparée de son pneu. Cette jante est ensuite mise en place sur un support et maintenue par une pince trois mors. Elle est ensuite mise en rotation pour être rénovée au moyen d'un outil de coupe. Lorsque la rénovation est terminée, selon le cas, cette jante peut être vernie ou peinte ou protégée d'une autre manière. Lorsque la protection est sèche et résistante, le pneu est remonté sur la jante qui est alors utilisable. La durée pendant laquelle la jante et la roue sont inutilisables est relativement longue, typiquement de l'ordre de 24 heures.

Lorsque la jante est tenue par une pince trois mors, elle est plaquée contre les mors. Dans ce cas, si la jante est voilée, le fait de la plaquer contre un support plan enlève le voile, pendant la durée du maintien dans le support. Ce voile réapparaît lorsque la jante n'est plus maintenue en place et en particulier lorsqu'elle est utilisée sur un véhicule.

Si la machine de rénovation de jantes maintien la jante de la même façon qu'en position d'utilisation sur un véhicule, c'est-à-dire par son moyeu, le voile peut être corrigé. Par contre, il s'avère que la jante subit des vibrations lors de son usinage. Du fait de ces vibrations, l'usinage est imparfait et l'état de surface après rénovation n'est pas idéal.

Il n'existe donc actuellement pas de machine de rénovation de jante qui permette d'assurer un état de surface de bonne qualité, tout en corrigeant un éventuel voile de la jante et en immobilisant la jante et la roue pendant une durée relativement brève.

### EXPOSE DE L'INVENTION

La présente invention se propose de réaliser une machine de rénovation de jante qui élimine les inconvénients des machines existantes. Cette machine est suffisamment simple et suffisamment fiable pour qu'elle puisse être utilisée par une personne sans qualification particulière. De plus, cette machine ne modifie pas le voile de la jante pendant son usinage. Cela signifie que si une jante est voilée lorsqu'elle est utilisée sur un véhicule, elle restera voilée dans la même mesure lorsqu'elle sera montée sur la machine de rénovation de jantes. Ceci permet d'usiner la jante à rénover de telle manière à supprimer le voile.

L'invention propose également une méthode de rénovation de jantes qui offre plusieurs avantages par rapport aux procédés existants. En particulier, le maintien de la jante sur la machine ne modifie pas l'éventuel voile de la jante. Il en résulte qu'il est possible de corriger ce voile par usinage. L'absence de modification du voile n'a pas pour effet, contrairement à ce qui se passe avec les méthodes existantes, de générer des vibrations. De ce fait, l'état de surface de la jante rénovée est de bonne qualité.

La méthode de l'invention permet en outre de modifier le processus de travail, qui assure une durée d'immobilisation très courte. Ceci est le cas même si la jante doit être protégée par un vernis ou un autre revêtement qui requiert un temps de séchage.

La machine et la méthode de l'invention éliminent une grande part des vibrations de la jante lors de son usinage, ce qui permet d'obtenir un état de surface de bonne qualité.

Les buts de l'invention sont atteints par une méthode de rénovation de jantes de véhicules, caractérisée en ce qu'elle comporte les étapes suivantes :
- fixation de la jante à rénover sur un support d'une machine de rénovation comportant un bâti, cette fixation étant identique à la fixation de ladite jante sur le véhicule auquel cette jante est destinée ;
- mise en place d'une masse d'inertie sur ladite jante à rénover ;
- mise en rotation de la jante à rénover ;
- usinage de la jante au moyen d'un outil de rénovation.

Les buts de l'invention sont également atteints par une machine telle que définie en préambule et caractérisée en ce que le support comporte une tige solidaire du support rotatif, cette tige étant agencée pour traverser un moyeu de la jante, le support comportant en outre une entretoise disposée de telle façon qu'un espace soit présent entre la jante et le support lorsque cette jante est positionnée de façon à être rénovée.

Selon cette invention, aucune qualification particulière n'est requise pour pouvoir utiliser la machine. Cette machine permet d'obtenir une qualité de travail particulièrement bonne, tout en requérant un temps de travail relativement court. De plus, elle peut être utilisée pour toute une gamme de jantes ayant des formes et des dimensions variées, sans pour cela nécessiter des modifications importantes de la machine.

L'invention permet également de corriger la forme de la jante dans le cas où celle-ci serait voilée.

La machine et la méthode selon l'invention permettent de réaliser un état de surface particulièrement bon, du fait que les vibrations de la jante lorsque celle-ci est mise en rotation sont particulièrement faibles. En outre, la méthode de l'invention permet un gain de temps important, ce gain de temps étant encore plus important dans le cas où la jante doit être vernie ou protégée par une peinture.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue schématique d'une machine selon l'invention, selon un mode de réalisation particulier ;
- la figure 2 représente une jante telle que traitée selon la méthode de l'invention, dans un premier mode de réalisation ;
- la figure 3 illustre une jante susceptible d'être traitée par la méthode de l'invention, dans une deuxième forme de réalisation ; et
- la figure 4 illustre une jante telle que traitée par la méthode de l'invention, selon une troisième forme de réalisation.

### MANIERES DE REALISER L'INVENTION

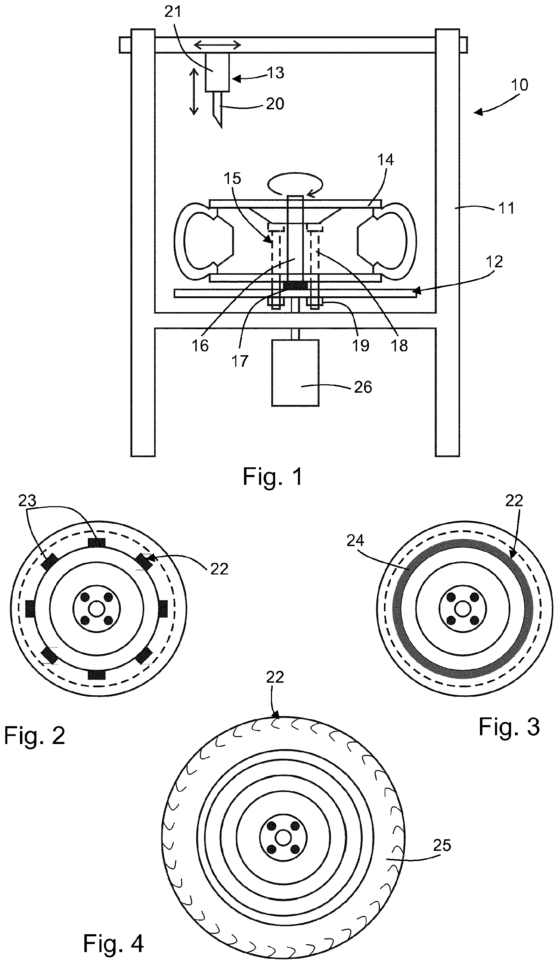

En référence à la figure 1, la machine 10 selon l'invention comporte essentiellement un bâti 11 sur lequel sont montés un support rotatif 12 et un ensemble d'usinage 13.

Le support rotatif 12 a idéalement une configuration telle qu'il peut recevoir une gamme de jantes 14 de différentes formes, de différentes tailles et ayant différents moyens de fixation de cette jante au véhicule auquel la jante est destinée. Le support rotatif 12 comporte des moyens de maintien 15 de la jante, de façon que celle-ci puisse être maintenue sur le support rotatif 12 de manière identique à la fixation de cette jante sur le véhicule auquel cette jante est destinée.

Selon un mode de réalisation avantageux, le support rotatif 12 comporte un organe de centrage 16, la jante à restaurer étant placée sur cet organe de centrage. Cet organe de centrage permet de positionner un moyeu de la jante dans une position déterminée, similaire à la position que prendrai la roue lorsqu'elle est montée sur un essieu de véhicule.

L'organe de centrage 16 peut coopérer avec une entretoise 17 destinée à maintenir une certaine distance entre l'un des flancs de la jante et le support rotatif 12. Cette entretoise permet de fixer la jante 14 au support rotatif 12 sans que cette jante ne soit déformée contre ce support.

Selon la jante qui doit être maintenue sur le support rotatif 12, l'entretoise 17 peut être modifiée, de façon à s'adapter au mieux aux dimensions de cette jante.

Les moyens de maintien 15 de la jante sur le support rotatif 12 peuvent être de différentes natures, selon les spécificités de la jante. Si la jante comporte un alésage central, les moyens de maintien 15 peuvent être formés de l'organe de centrage 16 en forme de tige, cette tige étant suffisamment longue pour dépasser de la jante. Dans ce cas, la tige se termine par un filetage qui coopère avec un écrou agencé pour maintenir la jante sur le support. Les moyens de maintien 15 peuvent également comporter une pluralité de tiges 18, comme cela est illustré par les figures, ces tiges 18 étant disposées autour du moyeu et comportant une zone filetée pour recevoir un écrou 19. Ces tiges 18 permettent de maintenir la jante 14 sur le support rotatif 12 de façon identique au maintien de la jante sur l'essieu du véhicule. Les éventuelles déformations de la jante, telles que le voile, ne sont pas modifiées par la fixation sur le support rotatif et correspondent aux déformations telles qu'elles existent lorsque la jante est montée sur le véhicule.

Il est clair que le support rotatif 12, et plus particulièrement les moyens de maintien 15 de la jante sont adaptés à la forme spécifique de la jante à maintenir et en particulier à la présence ou à l'absence d'alésage central traversant. Il est simplement important que la jante soit fixée de façon ferme au support rotatif, de façon à ce que la jante soit immobile par rapport au support, sans toutefois déformer cette jante.

L'ensemble d'usinage 13 de la machine 10 selon l'invention comprend essentiellement un outil d'usinage 20 et des moyens 21 pour actionner et pour déplacer cet outil d'usinage.

Dans un mode de réalisation avantageux, la jante 14 est montée sur le support rotatif 12, solidaire du bâti 11 de la machine 10. L'outil d'usinage 20 est quant à lui monté sur un bras solidaire du bâti de la machine. L'outil d'usinage 20 peut se déplacer le long du bras de façon à suivre un rayon de la jante. Par ailleurs, cet outil d'usinage peut se déplacer verticalement de façon à s'approcher ou s'éloigner de la jante.

Lorsque la jante 14 doit être rénovée, selon le mode de réalisation indiqué ci-dessus, cette jante est fixée sur le support rotatif 12. La fixation de la jante est réalisée de telle manière qu'elle soit identique à la fixation de cette jante sur un véhicule auquel cette jante est destinée.

La jante est solidaire d'une masse d'inertie 22. Différentes variantes de masses d'inertie sont illustrées par les figures 2, 3 et 4.

Dans la figure 2, la masse d'inertie 22 est formée par une série de poids 23 fixés à la périphérie de la jante 14. Ces poids 23 peuvent être tous de masse identique ou avoir une masse différente. Ils peuvent être positionnés de façon régulière et équidistante autour de la jante ou être positionnés dans des positions non équidistantes les uns des autres. Les masses 23 peuvent être déterminées individuellement et les poids peuvent être positionnés de façon à équilibrer la jante.

Dans la figure 3, la masse d'inertie 22 est représentée sous la forme d'une bande lestée 24 dont la masse est répartie en continu sur la périphérie de la jante 14.

Dans la figure 4, la masse d'inertie 22 est formée par le pneu 25 associé à la jante. Ce mode de réalisation est particulièrement intéressant du fait que généralement, lorsque la jante 14 est apportée pour rénovation, le pneu 25 est monté sur cette jante. Le fait d'utiliser ce pneu comme masse d'inertie apporte plusieurs avantages. D'une part, il n'est pas nécessaire de démonter la roue pour séparer le pneu de la jante, ce qui est fait actuellement dans la pratique. Ceci permet donc un gain de temps. D'autre part, comme le pneu 25 n'est pas séparé de la jante 14 lors de la rénovation, il n'est bien entendu pas nécessaire de remonter ce pneu sur la jante, ce qui permet également un gain de temps. En outre, dans le cas où la jante après rénovation doit être protégée par une peinture ou un vernis par exemple, du fait que le pneu est déjà monté sur la jante, il n'est pas nécessaire que le vernis ou la protection soit totalement sèche ou durcie, ce qui est le cas lorsque le pneu doit être mis en place après rénovation de la jante. Ceci permet un gain de temps considérable lors de la rénovation de la jante. Typiquement, une jante peut être rénovée en environ 2 heures au lieu de 24 heures avec les procédés conventionnels.

Lorsque la jante 14 est en place sur la machine de rénovation, le support rotatif 12 est mis en rotation au moyen d'un moteur 26. L'outil d'usinage 20 est ensuite approché de la jante, de façon à enlever une certaine quantité de matière. La profondeur de l'usinage peut être réglée en fonction des défauts de la jante à rénover. Ces défauts peuvent être des défauts de surface tels que des rayures ou des traces de coups, ou des défauts de forme tels qu'un voile.

Il est à noter qu'en fonction de la profondeur d'usinage requise, il est possible que plusieurs passes de l'outil d'usinage soient nécessaires. En effet, en fonction des matières de l'outil et de la jante et des vitesses de coupe notamment, il n'est pas possible d'usiner sur une profondeur plus grande qu'un seuil déterminé sans risquer de casser l'outil.

Comme indiqué précédemment, lorsque l'usinage de la jante est terminé, cette jante peut être protégée par une peinture, un vernis ou un revêtement de protection adéquat.

Le fait d'utiliser une masse d'inertie 22 sur la périphérie de la jante permet de réduire de façon importante les vibrations lors de la rotation de la jante. Ceci permet d'obtenir un état de surface de grande qualité. De plus, les déformations éventuelles de la jante peuvent être corrigées.

## Revendications

1. Méthode de rénovation de jantes de véhicules, **caractérisée en ce qu'**elle comporte les étapes suivantes :
• fixation de la jante (14) à rénover sur un support rotatif (12) d'une machine de rénovation (10) comportant un bâti (11), cette fixation étant identique à la fixation de ladite jante sur le véhicule auquel cette jante est destinée ;
• mise en place d'une masse d'inertie (22) sur ladite jante à rénover ;
• mise en rotation de la jante à rénover ;
• usinage de la jante au moyen d'un outil d'usinage (20).

2. Méthode de rénovation de jantes selon la revendication 1, **caractérisée en ce que** la masse d'inertie (22) est formée d'une pluralité de poids (23) fixés à la périphérie de ladite jante (14).

3. Méthode de rénovation de jantes selon la revendication 1, **caractérisée en ce que** la masse d'inertie (22) est formée d'une bande lestée (24) fixée à la périphérie de ladite jante (14).

4. Méthode de rénovation de jantes selon la revendication 1, **caractérisée en ce que** la masse d'inertie (22) est formée d'un pneu (25) monté sur ladite jante.

5. Méthode de rénovation de jantes selon la revendication 1, **caractérisée en ce que** la jante 14 est positionnée sur une entretoise (17), de telle façon qu'un espace soit présent entre le support rotatif (12) et la jante (14).

6. Méthode de rénovation de jantes selon la revendication 1, **caractérisée en ce que** l'usinage est réalisé au moyen d'une fraise.

7. Méthode de rénovation de jantes selon la revendication 1, **caractérisée en ce que** l'usinage est réalisé par tournage au moyen d'un outil de coupe.

8. Machine pour la rénovation de jantes, comportant un bâti (11), un support rotatif (12) et un ensemble d'usinage (13), **caractérisée en ce que** le support rotatif (12) comporte un organe de centrage (16) solidaire du support rotatif (12), cet organe de centrage (16) étant agencé pour traverser un moyeu de la jante, le support rotatif (12) comportant en outre une entretoise (17) disposée de telle façon qu'un espace soit présent entre la jante (14) et le support rotatif (12) lorsque cette jante est positionnée de façon à être rénovée.
